# EUROPEAN PATENT APPLICATION

(11) **EP 4 765 911 A1**
(43) Date of publication of application: **24.06.2026**
(21) Application number: 24864062.5
(22) Date of filing: 25.04.2024
(51) Int. Cl.: H04W 12/041, H04L 9/40, H04W 12/0431

(54) **INFORMATION FRAME TRANSMISSION METHOD, NETWORK DEVICE, AND STORAGE MEDIUM**

(30) Priority: 11.09.2023 CN 202311174485
(71) Applicant: ZTE Corporation, Shenzhen, Guangdong 518057 (CN)
(72) Inventor: YUAN, Liquan, Shenzhen, Guangdong 518057 (CN)
(74) Representative: Aipex B.V.
(86) International application number: PCT/CN2024/089704
(87) International publication number: WO 2025/055337

(57) **Abstract**

Provided are an information frame transmission method, a network device, and a storage medium. The method includes: sending a first information frame to a second network device, where the first information frame includes first frame number information and first key generation information of a first network device; receiving a second information frame from the second network device, where the second information frame includes second frame number information, second key generation information of the second network device, and a first message integrity code (MIC); generating a first pairwise transient key (PTK), where the first PTK is used for encrypting or decrypting a unicast message between the first network device and the second network device; verifying the first MIC and generating a second MIC according to the first PTK; and sending a third information frame, where the third information frame includes third frame number information and the second MIC.

## Description

### TECHNICAL FIELD

The present application relates to the field of wireless communication technology, for example, an information frame transmission method, a network device, and a storage medium.

### BACKGROUND

Each network device may support one or more multi-network-device coordination techniques. A specific signal (or unicast frame) needs to be defined between network devices to negotiate a specific manner for achieving coordination. During negotiation between network devices, the absence of protection measures leaves the content of a unicast frame exchanged between the network devices vulnerable to third-party eavesdropping and malicious tampering. Furthermore, within the coordination process of network devices, one network device may send a trigger frame (TF) to the other surrounding network devices, where the trigger frame includes sensitive information and is sent in plaintext in a broadcast manner, resulting in a risk of being eavesdropped on and tampered with by the third party. Therefore, the security of transmissions between network devices requires enhancement.

### SUMMARY

The present application provides an information frame transmission method, a network device, and a storage medium.

Embodiments of the present application provide an information frame transmission method applied to a first network device. The information frame transmission method includes the following:

A first information frame is sent to a second network device, where the first information frame includes first frame number information and first key generation information of the first network device.

A second information frame is received from the second network device, where the second information frame includes second frame number information, second key generation information of the second network device, and a first message integrity code (MIC).

A first Pairwise Transient Key (PTK) is generated, where the first PTK is used for encrypting or decrypting a unicast message between the first network device and the second network device.

The first MIC is verified and a second MIC is generated according to the first PTK.

A third information frame is sent, where the third information frame includes third frame number information and the second MIC.

Embodiments of the present application further provide an information frame transmission method applied to a second network device. The information frame transmission method includes the following:
A first information frame is received from a first network device, where the first information frame includes first frame number information and first key generation information of the first network device.
A second PTK is generated, where the second PTK is used for encrypting or decrypting a unicast message between the first network device and the second network device.

A first MIC is generated according to the second PTK.

A second information frame is sent to the first network device, where the second information frame includes second frame number information, second key generation information of the second network device, and the first MIC.

A third information frame is received from the first network device, where the third information frame includes third frame number information and a second MIC generated by the first network device.

Embodiments of the present application further provide a network device. The network device includes a memory, a processor, and a computer program stored in the memory and executable by the processor, where the processor executes the computer program to perform the preceding information frame transmission method.

Embodiments of the present application further provide a computer-readable storage medium having a computer program stored thereon, where the computer program, when executed by a processor, causes the processor to perform the preceding information frame transmission method.

### BRIEF DESCRIPTION OF DRAWINGS

FIG. 1 is a flowchart of an information frame transmission method according to an embodiment.
FIG. 2 is a diagram illustrating transmissions of authentication frames between network devices according to an embodiment.
FIG. 3 is a schematic diagram of a format of a first authentication frame according to an embodiment.
FIG. 4 is a schematic diagram of a format of a second authentication frame according to an embodiment.
FIG. 5 is a schematic diagram of a format of a third authentication frame according to an embodiment.
FIG. 6 is a schematic diagram of a format of a PTK according to an embodiment.
FIG. 7 is a schematic diagram of a format of an RSNE according to an embodiment.
FIG. 8 is a flowchart of an information frame transmission method according to an embodiment.
FIG. 9 is a diagram illustrating the structure of an information frame transmission apparatus according to an embodiment.
FIG. 10 is a diagram illustrating the structure of an information frame transmission apparatus according to an embodiment.
FIG. 11 is a diagram illustrating the hardware structure of a network device according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

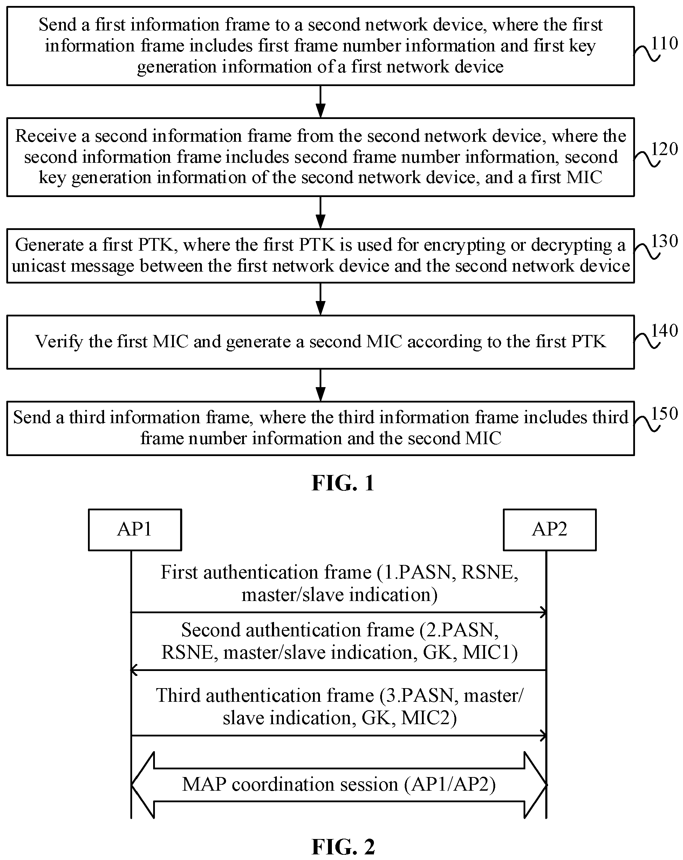

FIG. 1 is a flowchart of an information frame transmission method according to an embodiment. The method may be applied to a first network device. In embodiments of the present application, the network device may be a station or an access point (AP). The first network device and a second network device perform authentication and interaction through three types of information frames and negotiate for key generation on this basis. As shown in FIG. 1, the method of this embodiment includes steps below.

In step 110, a first information frame is sent to the second network device, where the first information frame includes first frame number information and first key generation information of the first network device.

In step 120, a second information frame is received from the second network device, where the second information frame includes second frame number information, second key generation information of the second network device, and a first MIC.

In step 130, a first PTK is generated, where the first PTK is used for encrypting or decrypting a unicast message between the first network device and the second network device.

In step 140, the first MIC is verified and a second MIC is generated according to the first PTK.

In step 150, a third information frame is sent, where the third information frame includes third frame number information and the second MIC.

In this embodiment, the first network device (for example, AP1) and the second network device (for example, AP2) exchange three types of information frames, where the information frames may be authentication frames or Extensible Authentication Protocol over LAN (EAPOL) frames. The first information frame includes the frame number information and the first key generation information of the first network device (such as public key information, for example, S-Ephemeral Pub) and may further include a robust security network element (RSNE), an RSN extension element (RSNXE), and indication information of a master/slave network device.

After receiving the first information frame, the second network device generates the second key generation information (such as public key information denoted as A-Ephemeral Pub) locally and generates a PTK (that is, a second PTK) using a certain algorithm. In the case where the information frames are the authentication frames, <KEK2, KCK2, TCK2> may be further generated according to the second PTK, where KEK2 (that is, a second key encryption key (KEK)) is used for encrypting or decrypting an authentication frame, KCK2 (that is, a second key confirmation key (KCK)) is used for calculating the first MIC, and TCK2 (that is, a second temporal control key (TCK)) is used for encrypting or decrypting a control frame. The second KEK may also be used for encrypting a frame body or partial information of the authentication frame, for example, encrypting or decrypting a group key (GK) and encrypting other information.

The second network device sends the second information frame to the first network device, where the second information frame includes the frame number information and the second key generation information of the second network device (such as the public key information, for example, A-Ephemeral Pub) and may further include an RSNE, an RSNXE, GK information, indication information of a master/slave network device, and the first MIC.

After receiving a second authentication frame, the first network device generates a PTK (that is, the first PTK) locally. In the case where the information frames are the authentication frames, KCK1 (that is, a first KCK) and KEK1 (that is, a first KEK) may be further generated according to the first PTK, where the first KCK is used for verifying the first MIC and generating the second MIC, and the first KEK may be used for decrypting a message and acquiring the GK information.

Additionally, the first network device sends the third information frame to the second network device, where the third information frame includes the frame number information and the second MIC.

FIG. 2 is a diagram illustrating transmissions of authentication frames between network devices according to an embodiment. As shown in FIG. 2, in a multi-AP mode, APs exchange frames to implement a generation and transmission process of a key for protection. The APs may exchange the authentication frames three times to generate pairwise keys (that is, the PTKs) and further generate, based on the PTKs, the KEKs for encrypting or decrypting authentication frames and the TCKs for encrypting or decrypting control frames. The APs may negotiate a master AP and a slave AP in a three-way handshake process, where the master AP distributes and maintains the GK, and the GK may be transmitted through the second authentication frame or a third authentication frame.

The method of this embodiment may be applied to a multi-AP (MAP) coordination process defined in Wi-Fi 8. AP1 and AP2 use the generated PTKs to encrypt and decrypt unicast messages exchanged between APs. Additionally, the GK may be used for encrypting and decrypting broadcast messages exchanged between APs. The method may also be applied to an interoperation process between an AP and a STA (the corresponding information frames are the EAPOL frames).

In an embodiment, in the case where the information frames are the authentication frames, the first key generation information includes first public key information (S-Ephemeral Pub), and the second key generation information includes second public key information (A-Ephemeral Pub); and in the case where the information frames are the EAPOL frames, the first key generation information includes a first random number, and the second key generation information includes a second random number.

In an embodiment, the first network device includes one of a first station, a first access point, a first multi-link access point, or a first multi-link station; and the second network device includes one of a second station, a second access point, a second multi-link station, or a second multi-link access point. The network device in this embodiment may be a multi-link device (MLD). For example, the station may be a multi-link station (non-AP MLD), and the access point may be a multi-link access point (AP MLD).

In an embodiment, in the case where the information frames are the authentication frames, each of the first information frame and the second information frame further includes the RSNE and the RSNXE; and in the case where the information frames are the EAPOL frames, each of the second information frame and the third information frame further includes the RSNE and the RSNXE.

In an embodiment, each of a first authentication frame, the second authentication frame, and the third authentication frame further includes indication information, and the indication information is used for indicating that the first network device is a master network device or a slave network device and correspondingly indicating that the second network device is the slave network device or the master network device. In this embodiment, the master/slave AP is indicated explicitly; that is, the first authentication frame and the second authentication frame each include indication information of the master/slave AP. It is to be noted that indication information carried in the two authentication frames cannot both indicate the master or both indicate the slave.

In an embodiment, the method further includes: determining according to a predefined field that the first network device is a master network device or a slave network device, and correspondingly determining that the second network device is a slave network device or a master network device. In this embodiment, the master/slave AP is indicated implicitly; that is, the authentication frame does not include an indication of the master/slave AP, but the master/slave AP is implicitly indicated through comparing particular predefined fields. For example, media access control (MAC) address information of both parties is compared, where one party serves as the master and the other party serves as the slave. On this basis, the master transmits the GK, and the slave receives the GK.

In an embodiment, the method further includes: in the case where the first network device is the master network device, transmitting the GK information to the second network device through the third authentication frame; or in the case where the first network device is the slave network device, receiving the GK information transmitted by the second network device through the second authentication frame; where the GK information is used for encrypting or decrypting a broadcast message between network devices. In FIG. 2, when AP2 serves as the master, AP2 transmits the GK through the second authentication frame; when AP1 serves as the master, AP1 transmits the GK through the third authentication frame.

In an embodiment, the method further includes: in the case where the first network device is the master network device, transmitting coordination group identifier information (for example, Group ID) to the second network device through the third authentication frame; or in the case where the first network device is the slave network device, receiving coordination group identifier information transmitted by the second network device through the second authentication frame. In this embodiment, the master AP may not only transmit the GK but also generate Group ID information that uniquely identifies a coordination group. The Group ID may be sent to the slave AP together with the GK information through the second authentication frame or the third authentication frame.

**Table 1 lists MAP parameters for transmitting MAP information. As shown in Table 1, the authentication frame may include the indication information of the master/slave network device, the coordination group identifier information, and/or the GK information.**

| Parameter | Meaning |
|---|---|
| Master/slave AP indication | Indication of the master/slave AP |
| Group ID | ID that uniquely identifies an MAP coordination group |
| GK | Key information for encrypting and decrypting multicast frames |

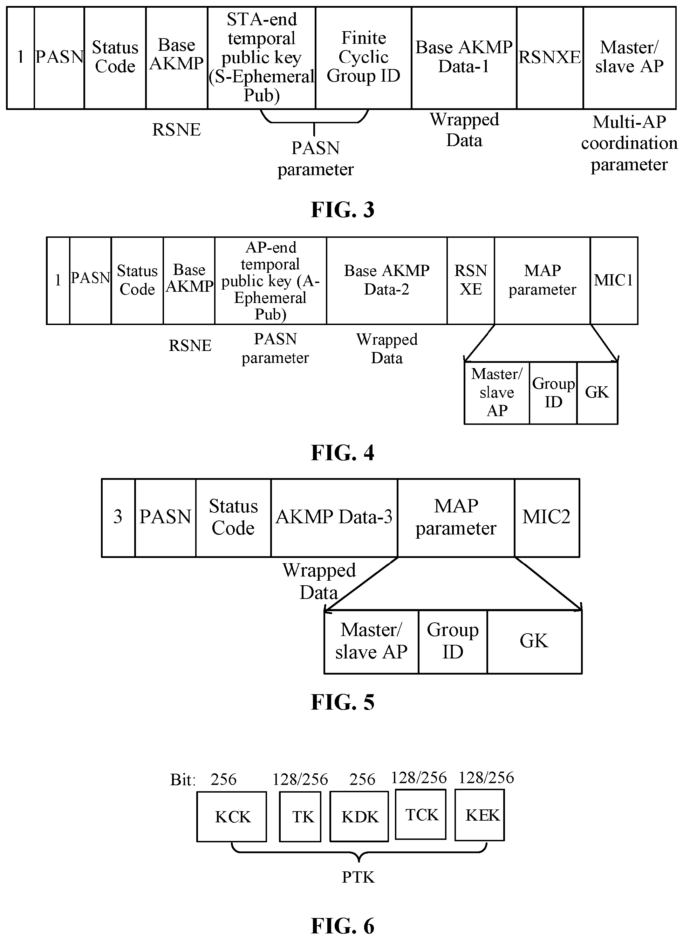

FIG. 3 is a schematic diagram of a format of a first authentication frame according to an embodiment. As shown in FIG. 3, the first authentication frame includes frame number and frame type information (1.PASN), status indication information (Status Code), an STA-end RSNE (including Authentication and Key Management Protocol (AKMP) information selected by the STA), PASN parameters (including STA-end public key information (S-Ephemeral Pub) and finite cyclic group information (Finite Cyclic Group ID)), AKMP data-1 information located in a wrapped data field and corresponding to the AKMP in the RSNE, an STA-end RSNXE, and a multi-AP coordination parameter (including the indication information of the master/slave network device).

FIG. 4 is a schematic diagram of a format of a second authentication frame according to an embodiment. As shown in FIG. 4, the second authentication frame includes frame number and frame type information (2.PASN), status indication information (Status Code), an AP-end RSNE (including AKMP information selected by the AP), PASN parameter information (PASN parameters including AP-end public key information (A-Ephemeral Pub)), AKMP data-2 information located in a wrapped data field and corresponding to the AKMP in the RSNE, an AP-end RSNXE, multi-AP coordination parameters (including the indication information of the master/slave network device, the coordination group identifier information, and the GK information), and MIC1.

FIG. 5 is a schematic diagram of a format of a third authentication frame according to an embodiment. As shown in FIG. 5, the third authentication frame includes frame number and frame type information (3.PASN), status indication information (Status Code), AKMP data-3 information located in a wrapped data field and corresponding to the AKMP, multi-AP coordination parameters (including the indication information of the master/slave network device, the coordination group identifier information, and the GK information), and MIC2.

In an embodiment, the method further includes: determining the first key confirmation key (KCK) and the first key encryption key (KEK) according to the first PTK, where the first KCK is used for verifying the first MIC and generating the second MIC, and the first KEK is used for decrypting the second authentication frame and encrypting the third authentication frame.

In an embodiment, the second authentication frame or the third authentication frame further includes the GK information, and the GK information includes at least one of: a group temporal key (GTK) for encrypting or decrypting a multicast data frame transmitted between the first network device and the second network device, an integrity group temporal key (IGTK) for encrypting or decrypting a multicast management frame transmitted between the first network device and the second network device, or an integrity control temporal key (ICTK) for encrypting or decrypting a multicast control frame transmitted between the first network device and the second network device.

In an embodiment, the GK may be used for encrypting and decrypting all types of frames transmitted between APs.

In an embodiment, generating the second MIC includes: generating the second MIC according to MAC address information of the first network device, MAC address information of the second network device, a hash value of a first preassociation security negotiation (PASN) frame body, partial information of the third authentication frame excluding a frame header and the second MIC, the first KCK, and a hash algorithm.

In this embodiment, MIC2 is generated according to the following information: MAC address information of the two APs, F1 Auth, Frame Data, the first KCK, and the hash algorithm (HMAC-HASH). For example, a generation algorithm of MIC2 is expressed as follows: HMAC-HASH (KCK1, AP1 MAC address information ∥ AP2 MAC address information ∥ F1 Auth ∥ Frame Data).

HMAC-HASH denotes the HASH (hash) algorithm. KCK1 is a key confirmation key generated according to the first PTK. AP1 MAC address information is basic service set identifier (BSSID) information of AP1 or the corresponding AP MLD address information or transmitter address (TA) information. AP2 MAC address information is BSSID information of AP2 or the corresponding AP MLD address information or receiver address (RA) information. F1 Auth denotes the hash value of the first PASN frame body. Frame Data denotes the partial information of the third authentication frame excluding the frame header and the MIC.

In an embodiment, generating the first PTK includes: generating the first PTK according to the MAC address information of the first network device, the MAC address information of the second network device, a shared secret derived using a Diffie-Hellman protocol, a pairwise master key (PMK), and a hash function. In this embodiment, the first PTK is generated according to AP1 MAC address information, AP2 MAC address information, the shared secret derived using the Diffie-Hellman protocol (Diffie-Hellman shared secret (DHss)), the PMK, and a key generation hash function. AP1/AP2 MAC address information may be the BSSID information of AP1/AP2 or AP MLD MAC address information corresponding to AP1/AP2.

For example, a PTK generation formula is expressed as follows:
PTK = KDF-HASH-NNN (PMK, "PTK Derivation", AP1 MAC information ∥ AP2 MAC information ∥ DHss).

PMK denotes pairwise master key information. DHss denotes the shared secret derived using the Diffie-Hellman protocol based on the public key. AP1 MAC denotes AP1 MAC address information. AP2 MAC denotes AP2 MAC address information. "PASN PTK Derivation" is a label. KDF-HASH-NNN denotes a key generation hash algorithm determined according to exchanged AKMP parameters.

In an embodiment, the information frames may be the EAPOL frames or the authentication frames, and the method further includes: determining at least one of the following according to the first PTK: a first temporal key (TK) for encrypting or decrypting a unicast data frame and a management frame; a first key derivation key (KDK) for generating key information; a first temporal control key (TCK) for encrypting or decrypting a unicast control frame; the first KEK for encrypting or decrypting an authentication frame; or the first KCK for verifying an MIC.

FIG. 6 is a schematic diagram of a format of a PTK according to an embodiment. As shown in FIG. 6, the PTK includes a conventional 256-bit KCK, 128-bit or 256-bit TK, and 256-bit KDK, and is extended to further include a 128-bit or 256-bit TCK for encrypting or decrypting the control frame and a 128-bit or 256-bit KEK for encrypting or decrypting the authentication frame. The format of the PTK is applicable to the first PTK and the second PTK.

In an embodiment, the first TCK and the first KEK are generated according to the KDK. In this embodiment, the TCK for encrypting or decrypting the unicast control frame and the KEK for encrypting or decrypting the second or third authentication frame are generated according to the KDK and a certain algorithm. For example, the TCK is generated according to a key generation function, the input parameter KDK, and a seed KDK_seed, where the function is expressed as that TCK = KDF-Hash-Length (KDK, "TCK generation", KDK_seed).

The KEK is generated according to a key generation function KDF-Hash-Length, the input parameter KDK, and a seed KEK_seed, where the function is expressed as that KEK = KDF-Hash-Length (KDK, "KEK generation", KEK_seed).

In an embodiment, the method further includes: indicating at least one of the following to a target network device through RSNE information: pairwise cipher suite information, authentication frame cipher suite information, multicast management frame cipher suite information, unicast control frame cipher suite information, or multicast control frame cipher suite information. In this embodiment, the RSNE information exchanged between AP1 and AP2 includes at least one of: the pairwise cipher suite information (Pairwise Cipher Suite), the authentication frame cipher suite information (AKM Suite), the multicast management frame cipher suite information (Group Management Cipher Suite), the unicast control frame cipher suite information (Pairwise Cipher Suite for Control), or the multicast control frame cipher suite information (Group Control Cipher Suite).

In an embodiment, the method further includes: indicating, through the RSNE information to the target network device, a unicast control frame cipher suite and a multicast control frame cipher suite.

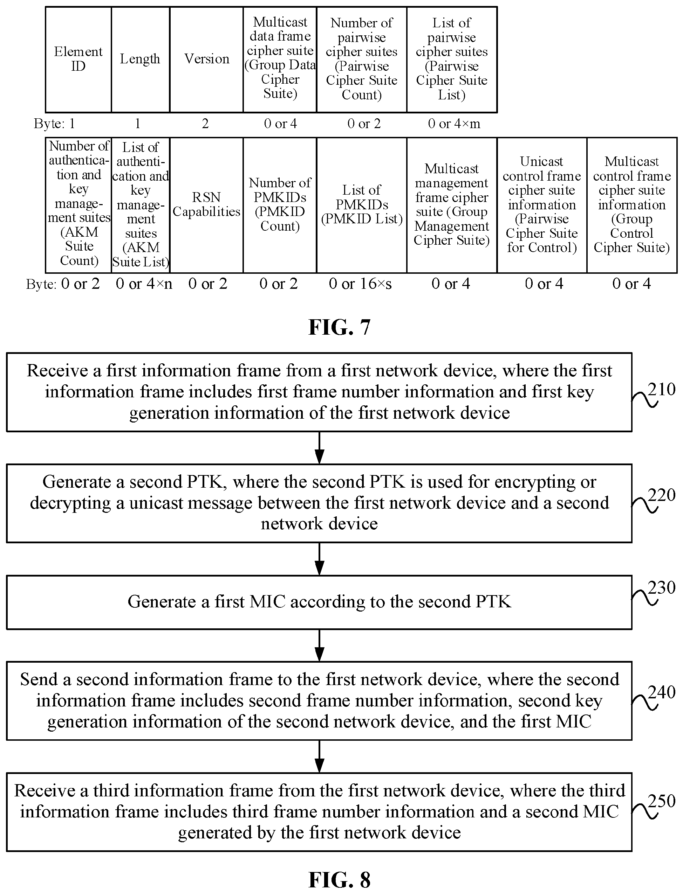

FIG. 7 is a schematic diagram of a format of an RSNE according to an embodiment. As shown in FIG. 7, the RSNE includes the unicast control frame cipher suite information and the multicast control frame cipher suite information for control, each of which has a length of 0 or 4 bytes and which are used for indicating the unicast control frame cipher suite and the multicast control frame cipher suite, respectively. Additionally, Table 2 lists the interpretations of other fields in the RSNE.

**Table 2 Interpretations of some fields in the RSNE**

| Field Name | Interpretation |
|---|---|
| Element ID | Uniquely identifying the element |
| Length | Field length information |
| Version | RSN version information |
| Group Data Cipher Suite | Multicast data frame cipher suite information |
| Pairwise Cipher Suite Count | Number of pairwise cipher suites |
| Pairwise Cipher Suite List | List of pairwise cipher suites |
| AKM (authentication and key management) Suite Count | Number of authentication and key management suites |
| AKM Suite List | List of authentication and key |
| | management suites |
| RSN Capabilities | RSN capability set |
| PMKID Count | Number of PMKIDs |
| PMKID List | List of PMKIDs |
| Group Management Cipher Suite | Multicast management frame cipher suite information |

In the method of this embodiment, the PTK may be generated and the GK may be transmitted between network devices by use of a PASN extension protocol. During PASN, a unicast control key TCK and an authentication frame encryption key KEK are generated; during PASN, the master/slave network device is negotiated and indicated; the unicast and multicast control frame cipher suites are indicated in the RSNE; and during PASN, the MIC information is generated. Moreover, the unicast and multicast control frame cipher suites are indicated in the RSNE in other processes than the PASN, and the TCK and the KEK are generated according to the PTK in other processes than the PASN. On this basis, the security and reliability of transmissions between network devices are improved.

FIG. 8 is a flowchart of an information frame transmission method according to an embodiment. As shown in FIG. 8, the method of this embodiment includes steps below.

In step 210, a first information frame is received from a first network device, where the first information frame includes first frame number information and first key generation information of the first network device.

In step 220, a second PTK is generated, where the second PTK is used for encrypting or decrypting a unicast message between the first network device and a second network device.

In step 230, a first MIC is generated according to the second PTK.

In step 240, a second information frame is sent to the first network device, where the second information frame includes second frame number information, second key generation information of the second network device, and the first MIC.

In step 250, a third information frame is received from the first network device, where the third information frame includes third frame number information and a second MIC generated by the first network device.

In this embodiment, the first network device and the second network device perform authentication and interaction through three types of information frames and negotiate for key generation on this basis, improving the reliability and security of information frame transmissions.

In an embodiment, the first information frame includes a first authentication frame, the second information frame includes a second authentication frame, and the third information frame includes a third authentication frame; or the first information frame includes a first EAPOL frame, the second information frame includes a second EAPOL frame, and the third information frame includes a third EAPOL frame.

In an embodiment, each of the first authentication frame, the second authentication frame, and the third authentication frame further includes indication information, and the indication information is used for indicating that the first network device is a master network device or a slave network device and correspondingly indicating that the second network device is the slave network device or the master network device.

In an embodiment, the method further includes: determining according to a predefined field that the first network device is the master network device or the slave network device, and correspondingly determining that the second network device is the slave network device or the master network device.

In an embodiment, the method further includes: in the case where the second network device is the master network device, transmitting GK information to the first network device through the second authentication frame; or in the case where the second network device is the slave network device, receiving GK information transmitted by the first network device through the third authentication frame; where the GK information is used for encrypting or decrypting a broadcast message between network devices.

In an embodiment, the method further includes: in the case where the second network device is the master network device, transmitting coordination group identifier information to the first network device through the second authentication frame; or in the case where the second network device is the slave network device, receiving coordination group identifier information transmitted by the first network device through the third authentication frame.

In an embodiment, the method further includes: generating a second KCK and a second KEK according to the second PTK, where the second KCK is used for calculating the first MIC, and the second KEK is used for encrypting the second authentication frame and decrypting the third authentication frame.

In an embodiment, generating the first MIC according to the second PTK includes: generating the first MIC according to MAC address information of the first network device, MAC address information of the second network device, an RSNE of the second network device, RSNXE information of the second network device, partial information of the second authentication frame excluding a frame header and the first MIC, the second KCK, and a hash algorithm.

In this embodiment, MIC1 is generated according to MAC address information of two APs, RSNE and RSNXE information in an AP2 beacon, Frame Data, the KCK, and an algorithm HMAC-HASH. RSNE and RSNXE information in an AP1 beacon may also be included to generate the MIC1.

For example, a generation manner of MIC1 is expressed as follows:
MIC1 = HMAC-HASH (KCK, AP2 MAC address information ∥ AP1 MAC address information ∥ AP2 Beacon RSNE ∥ AP2 Beacon RSNXE ∥ AP1 Beacon RSNE ∥ AP1 Beacon RSNXE ∥ Frame Data).

HMAC-HASH denotes the HASH (hash) algorithm. The KCK is a key confirmation key generated according to the PTK. AP2 MAC address information is BSSID information of AP2 or the corresponding AP MLD address information or transmitter address (TA) information. AP1 MAC address information is BSSID information of AP1 or the corresponding AP MLD address information or receiver address (RA) information. AP2 Beacon RSNE denotes RSNE information carried in a beacon frame sent by AP2. AP2 Beacon RSNXE denotes RSNXE information carried in the beacon frame sent by AP2. AP1 Beacon RSNE denotes RSNE information carried in a beacon frame sent by AP1. AP1 Beacon RSNXE denotes RSNXE information carried in the beacon frame sent by AP1. Frame Data denotes the partial information of the second authentication frame excluding the frame header and the MIC. ∥ denotes a connection symbol.

In an embodiment, generating the second PTK includes: generating the second PTK according to the MAC address information of the first network device, the MAC address information of the second network device, a shared secret derived using a Diffie-Hellman protocol, a PMK, and a hash function.

In an embodiment, the method further includes: determining at least one of the following according to the second PTK: a second TK for encrypting or decrypting a unicast data frame and a management frame; a second KDK for generating key information; a second TCK for encrypting or decrypting a unicast control frame; the second KEK for encrypting or decrypting the authentication frame; or the second KCK for verifying an MIC.

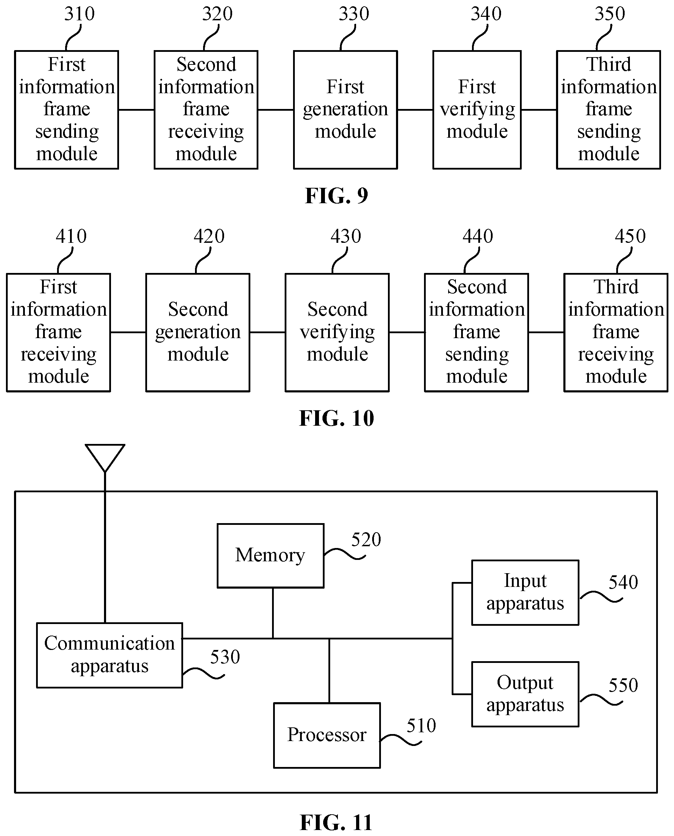

An embodiment of the present application provides an information frame transmission apparatus. FIG. 9 is a diagram illustrating the structure of an information frame transmission apparatus according to an embodiment. As shown in FIG. 9, the information frame transmission apparatus includes a first information frame sending module 310, a second information frame receiving module 320, a first generation module 330, a first verifying module 340, and a third information frame sending module 350.

The first information frame sending module 310 is configured to send a first information frame to a second network device, where the first information frame includes first frame number information and first key generation information of a first network device.

The second information frame receiving module 320 is configured to receive a second information frame from the second network device, where the second information frame includes second frame number information, second key generation information of the second network device, and a first MIC.

The first generation module 330 is configured to generate a first PTK, where the first PTK is used for encrypting or decrypting a unicast message between the first network device and the second network device.

The first verifying module 340 is configured to verify the first MIC and generate a second MIC according to the first PTK.

The third information frame sending module 350 is configured to send a third information frame, where the third information frame includes third frame number information and the second MIC.

The information frame transmission apparatus of this embodiment generates the PTK and transmits a GK by use of a PASN extension protocol. During PASN, a unicast control key TCK and an authentication frame encryption key KEK are generated; during PASN, a master/slave network device is negotiated and indicated; unicast and multicast control frame cipher suites are indicated in an RSNE; and during PASN, the MIC information is generated. Moreover, the unicast and multicast control frame cipher suites are indicated in the RSNE in other processes than the PASN, and the TCK and the KEK are generated according to the PTK in other processes than the PASN. On this basis, the security and reliability of transmissions between network devices are improved.

In an embodiment, the first key generation information includes first public key information, and the second key generation information includes second public key information. Alternatively, the first key generation information includes a first random number, and the second key generation information includes a second random number.

In an embodiment, the first network device includes one of a first station, a first access point, a first multi-link access point, or a first multi-link station; and the second network device includes one of a second station, a second access point, a second multi-link station, or a second multi-link access point.

In an embodiment, each of the first information frame and the second information frame further includes an RSNE and an RSNXE. Alternatively, each of the second information frame and the third information frame further includes an RSNE and an RSNXE.

In an embodiment, the first information frame includes a first authentication frame, the second information frame includes a second authentication frame, and the third information frame includes a third authentication frame.

In an embodiment, the first information frame includes a first EAPOL frame, the second information frame includes a second EAPOL frame, and the third information frame includes a third EAPOL frame.

In an embodiment, each of the first authentication frame and the second authentication frame further includes indication information, and the indication information is used for indicating that the first network device is a master network device or a slave network device and correspondingly indicating that the second network device is the slave network device or the master network device.

In an embodiment, the apparatus further includes a first master/slave determination module.

The first master/slave determination module is configured to determine according to a predefined field that the first network device is the master network device or the slave network device, and correspondingly determine that the second network device is the slave network device or the master network device.

In an embodiment, the apparatus further includes a first transmission module.

In the case where the first network device is the master network device, the first transmission module is configured to transmit GK information to the second network device through the third authentication frame.

In the case where the first network device is the slave network device, the first transmission module is configured to receive GK information transmitted by the second network device through the second authentication frame.

The GK information is used for encrypting or decrypting a broadcast message between network devices.

In an embodiment, the apparatus further includes a second transmission module.

In the case where the first network device is the master network device, the second transmission module is configured to transmit coordination group identifier information to the second network device through the third authentication frame.

In the case where the first network device is the slave network device, the second transmission module is configured to receive coordination group identifier information transmitted by the second network device through the second authentication frame.

In an embodiment, the apparatus further includes a decomposition module.

The decomposition module is configured to determine a first KCK and a first KEK according to the first PTK, where the first KCK is used for verifying the first MIC and generating the second MIC, and the first KEK is used for decrypting the second authentication frame and encrypting the third authentication frame.

In an embodiment, the second authentication frame or the third authentication frame further includes the GK information, and the GK information includes at least one of: a GTK for encrypting or decrypting a multicast data frame transmitted between the first network device and the second network device, an IGTK for encrypting or decrypting a multicast management frame transmitted between the first network device and the second network device, or an ICTK for encrypting or decrypting a multicast control frame transmitted between the first network device and the second network device.

In an embodiment, generating the second MIC includes: generating the second MIC according to MAC address information of the first network device, MAC address information of the second network device, a hash value of a first PASN frame body, partial information of the third authentication frame excluding a frame header and the second MIC, the first KCK, and a hash algorithm.

In an embodiment, generating the first PTK includes: generating the first PTK according to the MAC address information of the first network device, the MAC address information of the second network device, a shared secret derived using a Diffie-Hellman protocol, a PMK, and a hash function.

In an embodiment, the apparatus further includes a first determination module.

The first determination module is configured to determine at least one of the following according to the first PTK: a first TK for encrypting or decrypting a unicast data frame and a management frame; a first KDK for generating key information; a first TCK for encrypting or decrypting a unicast control frame; the first KEK for encrypting or decrypting the authentication frame; or the first KCK for verifying an MIC.

In an embodiment, the first TCK and the first KEK are generated according to the KDK.

In an embodiment, the apparatus is further configured to indicate at least one of the following to a target network device through RSNE information: pairwise cipher suite information, authentication frame cipher suite information, multicast management frame cipher suite information, unicast control frame cipher suite information, or multicast control frame cipher suite information.

In an embodiment, the apparatus is further configured to indicate, through the RSNE information to the target network device, a unicast control frame cipher suite and a multicast control frame cipher suite.

The information frame transmission apparatus of this embodiment is based on the same inventive concept as the information frame transmission method of any preceding embodiment. For technical details not described in this embodiment, see any preceding embodiment. This embodiment has the same beneficial effects as the performed information frame transmission method.

An embodiment of the present application provides an information frame transmission apparatus. FIG. 10 is a diagram illustrating the structure of an information frame transmission apparatus according to an embodiment. As shown in FIG. 10, the information frame transmission apparatus includes a first information frame receiving module 410, a second generation module 420, a second verifying module 430, a second information frame sending module 440, and a third information frame receiving module 450.

The first information frame receiving module 410 is configured to receive a first information frame from a first network device, where the first information frame includes first frame number information and first key generation information of the first network device.

The second information frame receiving module 420 is configured to generate a second PTK, where the second PTK is used for encrypting or decrypting a unicast message between the first network device and a second network device.

The second generation module 430 is configured to generate a first MIC according to the second PTK.

The second information frame sending module 440 is configured to send a second information frame to the first network device, where the second information frame includes second frame number information, second key generation information of the second network device, and the first MIC.

The third information frame receiving module 450 is configured to receive a third information frame from the first network device, where the third information frame includes third frame number information and a second MIC generated by the first network device.

The information frame transmission apparatus of this embodiment generates the PTK and transmits a GK by use of a PASN extension protocol. During PASN, a unicast control key TCK and an authentication frame encryption key KEK are generated; during PASN, a master/slave network device is negotiated and indicated; unicast and multicast control frame cipher suites are indicated in an RSNE; and during PASN, the MIC information is generated. Moreover, the unicast and multicast control frame cipher suites are indicated in the RSNE in other processes than the PASN, and the TCK and the KEK are generated according to the PTK in other processes than the PASN. On this basis, the security and reliability of transmissions between network devices are improved.

In an embodiment, the first information frame includes a first authentication frame, the second information frame includes a second authentication frame, and the third information frame includes a third authentication frame. Alternatively, the first information frame includes a first EAPOL frame, the second information frame includes a second EAPOL frame, and the third information frame includes a third EAPOL frame.

In an embodiment, each of the first authentication frame, the second authentication frame, and the third authentication frame further includes indication information, and the indication information is used for indicating that the first network device is a master network device or a slave network device and correspondingly indicating that the second network device is the slave network device or the master network device.

In an embodiment, the apparatus further includes a second master/slave determination module.

The second master/slave determination module is configured to determine according to a predefined field that the first network device is the master network device or the slave network device, and correspondingly determine that the second network device is the slave network device or the master network device.

In an embodiment, the apparatus further includes a third transmission module.

In the case where the second network device is the master network device, the third transmission module is configured to transmit GK information to the first network device through the second authentication frame.

In the case where the second network device is the slave network device, the third transmission module is configured to receive GK information transmitted by the first network device through the third authentication frame.

The GK information is used for encrypting or decrypting a broadcast message between network devices.

In an embodiment, the apparatus further includes a fourth transmission module.

In the case where the second network device is the master network device, the fourth transmission module is configured to transmit coordination group identifier information to the first network device through the second authentication frame.

In the case where the second network device is the slave network device, the fourth transmission module is configured to receive coordination group identifier information transmitted by the first network device through the third authentication frame.

In an embodiment, the apparatus further includes a decomposition module.

The decomposition module is configured to generate a second KCK and a second KEK according to the second PTK, where the second KCK is used for calculating the first MIC, and the second KEK is used for encrypting the second authentication frame and decrypting the third authentication frame.

In an embodiment, generating the first MIC according to the second PTK includes: generating the first MIC according to MAC address information of the first network device, MAC address information of the second network device, an RSNE of the second network device, RSNXE information of the second network device, partial information of the second authentication frame excluding a frame header and the first MIC, the second KCK, and a hash algorithm.

In an embodiment, generating the second PTK includes: generating the second PTK according to the MAC address information of the first network device, the MAC address information of the second network device, a shared secret derived using a Diffie-Hellman protocol, a PMK, and a hash function.

In an embodiment, the apparatus further includes a second determination module, which is configured to determine at least one of the following according to the second PTK: a second TK for encrypting or decrypting a unicast data frame and a management frame; a second KDK for generating key information; a second TCK for encrypting or decrypting a unicast control frame; the second KEK for encrypting or decrypting the authentication frame; or the second KCK for verifying an MIC.

The information frame transmission apparatus of this embodiment is based on the same inventive concept as the information frame transmission method of any preceding embodiment. For technical details not described in this embodiment, see any preceding embodiment. This embodiment has the same beneficial effects as the performed information frame transmission method.

An embodiment of the present application provides a network device. FIG. 11 is a diagram illustrating the hardware structure of a network device according to an embodiment. As shown in FIG. 11, the network device of the present application includes a processor 510 and a memory 520. The network device may include one or more processors 510, with one processor 510 shown as an example in FIG. 1. The memory 520 is configured to store one or more programs. The one or more programs are executed by the one or more processors 510 to cause the one or more processors 510 to perform the information frame transmission method of any embodiment of the present application.

The network device further includes a communication apparatus 530, an input apparatus 540, and an output apparatus 550.

The processor 510, the memory 520, the communication apparatus 530, the input apparatus 540, and the output apparatus 550 in the network device may be connected via a bus or in other manners, where the connection via a bus is shown as an example in FIG. 11.

The input apparatus 540 may be configured to receive inputted digital or character information and generate key signal input related to user settings and function control of the network device. The output apparatus 550 may include a display device, such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules corresponding to the information frame transmission method of any embodiment of the present application (for example, the first information frame sending module 310, the second information frame receiving module 320, the first generation module 330, the first verifying module 340, and the third information frame sending module 350 in the information frame transmission apparatus). The memory 520 may include a program storage region and a data storage region. The program storage region may store an operating system and an application program required by at least one function. The data storage region may store data created depending on use of the network device. Additionally, the memory 520 may include a high-speed random-access memory and may further include a non-volatile memory such as at least one magnetic disk memory, a flash memory, or another non-volatile solid-state memory. In some examples, the memory 520 may further include memories remotely disposed relative to the processor 510, and these remote memories may be connected to the network device via a network. Examples of the network include, but are not limited to, the Internet, an intranet, a local area network, a mobile communication network, and a combination thereof.

An embodiment of the present application provides a storage medium storing a computer program which, when executed by a processor, causes the processor to perform the information frame transmission method of any embodiment of the present application. The method includes: sending a first information frame to a second network device, where the first information frame includes first frame number information and first key generation information of a first network device; receiving a second information frame from the second network device, where the second information frame includes second frame number information, second key generation information of the second network device, and a first MIC; generating a first PTK, where the first PTK is used for encrypting or decrypting a unicast message between the first network device and the second network device; verifying the first MIC and generating a second MIC according to the first PTK; and sending a third information frame, where the third information frame includes third frame number information and the second MIC. Alternatively, the method includes: receiving a first information frame from a first network device, where the first information frame includes first frame number information and first key generation information of the first network device; generating a second PTK, where the second PTK is used for encrypting or decrypting a unicast message between the first network device and a second network device; generating a first MIC according to the second PTK; sending a second information frame to the first network device, where the second information frame includes second frame number information, second key generation information of the second network device, and the first MIC; and receiving a third information frame from the first network device, where the third information frame includes third frame number information and a second MIC generated by the first network device.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system or device or any combination thereof. Concrete examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, and any suitable combination thereof. The computer-readable storage medium may be any tangible medium including or storing a program. The program may be used by or used in conjunction with an instruction execution system or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM, or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. An information frame transmission method, applied to a first network device and comprising:
sending a first information frame to a second network device, wherein the first information frame comprises first frame number information and first key generation information of the first network device;
receiving a second information frame from the second network device, wherein the second information frame comprises second frame number information, second key generation information of the second network device, and a first message integrity code, MIC;
generating a first pairwise transient key, PTK, wherein the first PTK is used for encrypting or decrypting a unicast message between the first network device and the second network device;
verifying the first MIC and generating a second MIC according to the first PTK; and
sending a third information frame, wherein the third information frame comprises third frame number information and the second MIC.

2. The information frame transmission method of claim 1, wherein the first key generation information comprises first public key information, and the second key generation information comprises second public key information; or
the first key generation information comprises a first random number, and the second key generation information comprises a second random number.

3. The information frame transmission method of claim 1, wherein the first network device comprises one of a first station, a first access point, a first multi-link access point, or a first multi-link station; and the second network device comprises one of a second station, a second access point, a second multi-link station, or a second multi-link access point.

4. The information frame transmission method of claim 1, wherein each of the first information frame and the second information frame further comprises a robust security network element, RSNE, and a robust security network extension element, RSNXE; or
each of the second information frame and the third information frame further comprises an RSNE and an RSNXE.

5. The information frame transmission method of claim 1, wherein the first information frame further comprises a first authentication frame, the second information frame further comprises a second authentication frame, and the third information frame further comprises a third authentication frame.

6. The information frame transmission method of claim 1, wherein the first information frame further comprises a first Extensible Authentication Protocol over LAN, EAPOL, frame, the second information frame further comprises a second EAPOL frame, and the third information frame further comprises a third EAPOL frame.

7. The information frame transmission method of claim 5, wherein
each of the first authentication frame, the second authentication frame, and the third authentication frame comprises indication information, and the indication information is used for indicating that the first network device is a master network device or a slave network device and correspondingly indicating that the second network device is the slave network device or the master network device.

8. The information frame transmission method of claim 5, further comprising:
determining according to a predefined field that the first network device is a master network device or a slave network device, and correspondingly determining that the second network device is the slave network device or the master network device.

9. The information frame transmission method of claim 7 or 8, further comprising:
in a case where the first network device is the master network device, transmitting group key, GK, information to the second network device through the third authentication frame; or
in a case where the first network device is the slave network device, receiving GK information transmitted by the second network device through the second authentication frame;
wherein the GK information is used for encrypting or decrypting a broadcast message between network devices.

10. The information frame transmission method of claim 7 or 8, further comprising:
in a case where the first network device is the master network device, transmitting coordination group identifier information to the second network device through the third authentication frame; or
in a case where the first network device is the slave network device, receiving coordination group identifier information transmitted by the second network device through the second authentication frame.

11. The information frame transmission method of claim 5, further comprising:
determining a first key confirmation key, KCK, and a first key encryption key, KEK, according to the first PTK, wherein the first KCK is used for verifying the first MIC and generating the second MIC, and the first KEK is used for decrypting the second authentication frame and encrypting the third authentication frame.

12. The information frame transmission method of claim 5, wherein the second authentication frame or the third authentication frame comprises GK information, and the GK information comprises at least one of:
a group temporal key, GTK, for encrypting or decrypting a multicast data frame transmitted between the first network device and the second network device, an integrity group temporal key, IGTK, for encrypting or decrypting a multicast management frame transmitted between the first network device and the second network device, or an integrity control temporal key for encrypting or decrypting a multicast control frame transmitted between the first network device and the second network device.

13. The information frame transmission method of claim 5, wherein generating the second MIC comprises:
generating the second MIC according to media access control, MAC, address information of the first network device, MAC address information of the second network device, a hash value of a first preassociation security negotiation, PASN, frame body, partial information of the third authentication frame excluding a frame header and the second MIC, a first KCK, and a hash algorithm.

14. The information frame transmission method of claim 1, wherein generating the first PTK comprises:
generating the first PTK according to MAC address information of the first network device, MAC address information of the second network device, a shared secret derived using a Diffie-Hellman protocol, a pairwise master key, PMK, and a hash function.

15. The information frame transmission method of claim 1, further comprising:
determining at least one of the following according to the first PTK:
a first temporal key, TK, for encrypting or decrypting a unicast data frame and a management frame;
a first key derivation key, KDK, for generating key information;
a first temporal control key, TCK, for encrypting or decrypting a unicast control frame;
a first KEK for encrypting or decrypting an authentication frame; or
a first KCK for verifying an MIC.

16. The information frame transmission method of claim 15, wherein the first TCK and the first KEK are generated according to the first KDK.

17. The information frame transmission method of claim 1, further comprising:
indicating at least one of the following to a target network device through RSNE information:
pairwise cipher suite information, authentication frame cipher suite information, multicast management frame cipher suite information, unicast control frame cipher suite information, or multicast control frame cipher suite information.

18. The information frame transmission method of claim 1, further comprising:
indicating, through RSNE information to a target network device, a unicast control frame cipher suite and a multicast control frame cipher suite.

19. An information frame transmission method, applied to a second network device and comprising:
receiving a first information frame from a first network device, wherein the first information frame comprises first frame number information and first key generation information of the first network device;
generating a second pairwise transient key, PTK, wherein the second PTK is used for encrypting or decrypting a unicast message between the first network device and the second network device;
generating a first message integrity code, MIC, according to the second PTK;
sending a second information frame to the first network device, wherein the second information frame comprises second frame number information, second key generation information of the second network device, and the first MIC; and
receiving a third information frame from the first network device, wherein the third information frame comprises third frame number information and a second MIC generated by the first network device.

20. The information frame transmission method of claim 19, wherein the first information frame further comprises a first authentication frame, the second information frame further comprises a second authentication frame, and the third information frame further comprises a third authentication frame;
or
the first information frame further comprises a first Extensible Authentication Protocol over LAN, EAPOL, frame, the second information frame further comprises a second EAPOL frame, and the third information frame further comprises a third EAPOL frame.

21. The information frame transmission method of claim 20, wherein each of the first authentication frame, the second authentication frame, and the third authentication frame comprises indication information, and the indication information is used for indicating that the first network device is a master network device or a slave network device and correspondingly indicating that the second network device is the slave network device or the master network device.

22. The information frame transmission method of claim 20, further comprising:
determining according to a predefined field that the first network device is a master network device or a slave network device, and correspondingly determining that the second network device is the slave network device or the master network device.

23. The information frame transmission method of claim 20, further comprising:
in a case where the second network device is a master network device, transmitting group key, GK, information to the first network device through the second authentication frame; or
in a case where the second network device is a slave network device, receiving GK information transmitted by the first network device through the third authentication frame;
wherein the GK information is used for encrypting or decrypting a broadcast message between network devices.

24. The information frame transmission method of claim 20, further comprising:
in a case where the second network device is a master network device, transmitting coordination group identifier information to the first network device through the second authentication frame; or
in a case where the second network device is a slave network device, receiving coordination group identifier information transmitted by the first network device through the third authentication frame.

25. The information frame transmission method of claim 20, further comprising:
generating a second key confirmation key, KCK, and a second key encryption key, KEK, according to the second PTK, wherein the second KCK is used for calculating the first MIC, and the second KEK is used for encrypting the second authentication frame and decrypting the third authentication frame.

26. The information frame transmission method of claim 20, wherein generating the first MIC according to the second PTK comprises:
generating the first MIC according to media access control, MAC, address information of the first network device, MAC address information of the second network device, a robust security network element, RSNE, of the second network device, robust security network extension element, RSNXE, information of the second network device, partial information of the second authentication frame excluding a frame header and the first MIC, a second KCK, and a hash algorithm.

27. The information frame transmission method of claim 19, wherein generating the second PTK comprises:
generating the second PTK according to MAC address information of the first network device, MAC address information of the second network device, a shared secret derived using a Diffie-Hellman protocol, a pairwise master key, PMK, and a hash function.

28. The information frame transmission method of claim 19, further comprising:
determining at least one of the following according to the second PTK:
a second temporal key, TK, for encrypting or decrypting a unicast data frame and a management frame;
a second key derivation key, KDK, for generating key information;
a second temporal control key, TCK, for encrypting or decrypting a unicast control frame;
a second KEK for encrypting or decrypting an authentication frame; or
a second KCK for verifying an MIC.

29. A network device, comprising a memory and at least one processor, wherein
the memory is configured to store at least one program; and
the at least one program, when executed by the at least one processor, causes the at least one processor to perform the information frame transmission method of any one of claims 1 to 28.

30. A computer-readable storage medium having a computer program stored thereon, wherein the computer program, when executed by a processor, causes the processor to perform the information frame transmission method of any one of claims 1 to 28.
